(19) Europäisches Patentamt
European Patent Office
Office européen des brevets

(11) **EP 3 049 237 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **14772396.9**

(22) Anmeldetag: **25.09.2014**

(51) Internationale Patentklassifikation (IPC):
**B29D 11/00** (2006.01)     **B29C 45/37** (2006.01)
**B29C 45/26** (2006.01)

(52) Gemeinsame Patentklassifikation (CPC):
**B29D 11/00769; B29C 45/2675; B29C 45/372; B29D 11/0048**

(86) Internationale Anmeldenummer:
**PCT/EP2014/070573**

(87) Internationale Veröffentlichungsnummer:
**WO 2015/044314 (02.04.2015 Gazette 2015/13)**

(54) **VERFAHREN ZUM HERSTELLEN EINES KUNSTSTOFFFORMTEILS**

METHOD FOR PRODUCING A PLASTICS MOULDING

PROCÉDÉ POUR LA PRODUCTION D'UNE PIÈCE MOULÉE EN MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013 DE 102013110702**

(43) Veröffentlichungstag der Anmeldung:
**03.08.2016 Patentblatt 2016/31**

(73) Patentinhaber:
• **Leonhard Kurz Stiftung & Co. KG**
  **90763 Fürth (DE)**
• **OVD Kinegram AG**
  **6300 Zug (CH)**

(72) Erfinder:
• **BURGER, Harald**
  **90480 Nürnberg (DE)**

• **DINKELMEYER, Volker**
  **91792 Ellingen (DE)**
• **SCHILLING, Andreas**
  **CH-6332 Hagendorn (ZG) (CH)**
• **MADER, Sebastian**
  **CH-6340 Baar (CH)**

(74) Vertreter: **Louis Pöhlau Lohrentz**
**Patentanwälte**
**Postfach 30 55**
**90014 Nürnberg (DE)**

(56) Entgegenhaltungen:
WO-A1-96/16794          WO-A1-2012/006637
US-A- 4 747 981          US-A- 5 538 674
US-A1- 2002 134 751      US-A1- 2002 181 224
US-A1- 2005 285 287

**Beschreibung**

Die Erfindung betrifft ein Verfahren zum Herstellen eines Kunststoffformteils.

Zur Herstellung von optischen Bauteilen aus Kunststoff ist es bekannt, Spritzgussformen zu verwenden.

Beispielsweise offenbart die EP 0 878 291 A1 eine Spritzgussform zum Herstellen von diffraktiven Linsen. Die Spritzgussform umfasst zwei Formhälften, die eine linsenförmige Kavität ausbilden. Eine der Formhälften weist eine Ausnehmung auf, in welche ein Stempel einsetzbar ist. Der Stempel bildet dann die gesamte, von dieser Formhälfte gebildete Oberfläche der Kavität aus und trägt auf seiner der Kavität zugewandten Seite eine Struktur, die beim Spritzgießen in das Kunststoffformteil eingeformt wird.

Aus der US 2005/285287 A1 ist beispielsweise eine Spritzgussform mit zwei Formhälften und einem Formeinsatz bekannt.

Aus der WO 2012/006637 A1 ist beispielsweise ein Kunststoffformkörper in Form einer ophthalmologischen Linse mit einer Oberflächenstruktur bekannt.

Aus der US 2002/181224 A1 ist beispielsweise eine Spritzgießeinrichtung mit einem Formeinsatz zur Herstellung einer Lichtleiterplatte bekannt.

Es ist die Aufgabe der vorliegenden Erfindung, ein Verfahren bereitzustellen, mittels welchen beliebige Kunststoffformteile durch Spritzgießen mit zusätzlichen optischen Effekten ausgestattet werden können.

Diese Aufgabe wird durch ein Verfahren mit den Merkmalen des Patentanspruchs 1 gelöst.

Bei dem Verfahren zum Herstellen eines Kunststoffformteils wird ein Formeinsatz mit einem diffraktiven Oberflächenrelief bereitgestellt, der Formeinsatz in eine Formhälfte einer Spritzgussform eingesetzt, welche zusammen mit wenigstens einer weiteren Formhälfte eine Kavität zum Herstellen des Kunststoffformteils ausbildet. Der Formeinsatz wird dabei so in die Spritzgussform eingesetzt, dass das diffraktive Oberflächenrelief einen Teilbereich der von der Formhälfte gebildeten Oberfläche der Kavität ausbildet. Anschließend wird das Kunststoffformteil durch Spritzgießen mittels der Spritzgussform abgeformt.

Spritzgussformen umfassen in der Regel zwei Formhälften, die zusammen die Kavität ausbilden. Es sind jedoch auch mehrteilige Formen denkbar. Auch bei Formen mit mehr als zwei Teilen, die zusammen die Kavität ausbilden, werden hier die jeweiligen Teile als Formhälften bezeichnet.

Unter der Kavität der Spritzgussform wird hier derjenige Hohlraum der Spritzgussform verstanden, der komplementär zum herzustellenden Formteil ist und in dem das Kunststoffformteil abgeformt wird. Weitere Hohlräume der Spritzgussform, wie beispielsweise das Angusssystem werden hier nicht als Bestandteil der Kavität verstanden.

Der Formeinsatz umfasst ein diffraktives Oberflächenrelief und ist so in eine Formhälfte einer Spritzgussform, welche zusammen mit wenigstens einer weiteren Formhälfte eine Kavität zum Herstellen des Kunststoffformteils ausbildet, derart einsetzbar, dass das diffraktive Oberflächenrelief einen Teilbereich der von der Formhälfte gebildeten Oberfläche der Kavität der Spritzgussform ausbildet.

Die Spritzgussform zum Herstellen eines Kunststoffformteils umfasst zumindest eine Formhälfte, welche zusammen mit wenigstens einer weiteren Formhälfte eine Kavität zum Herstellen des Kunststoffformteils ausbildet, wobei die Formhälfte eine Aufnahme aufweist, in welche ein Formeinsatz mit einem diffraktiven Oberflächenrelief so einsetzbar ist, dass das diffraktive Oberflächenrelief einen Teilbereich der von der Formhälfte gebildeten inneren Oberfläche der Kavität der Spritzgussform ausbildet.

Ein mittels des beschriebenen Verfahrens unter Verwendung der beschriebenen Spritzgussform und des beschriebenen Formeinsatzes hergestelltes Kunststoffformteil umfasst ein diffraktives Oberflächenrelief, welches sich über lediglich einen Teilbereich einer Oberfläche des Kunststoffformteils erstreckt.

Auf die beschriebene Art und Weise können Kunststoffformteile erhalten werden, die diffraktive optische Elemente umfassen, jedoch nicht notwendigerweise als optische Bauelemente konzipiert sind. Die nicht durch das diffraktive Oberflächenrelief belegten Teilbereiche der Oberfläche können also weitere Funktionen übernehmen. Das diffraktive Oberflächenrelief kann damit beispielsweise auch lediglich zu dekorativen Zwecken, zu Zwecken der Fälschungssicherheit oder als Beschriftung dienen. Ferner stehen die nicht durch das diffraktive Oberflächenrelief belegten Teilbereiche der Oberfläche somit auch für andere optische Funktionen zur Verfügung. So kann beispielsweise ein dekoratives diffraktives Element mit anderen, nicht-diffraktiven Elementen, wie z.B. Retroreflektoren oder dergleichen, kombiniert werden. Es ist ebenso möglich, die nicht durch das diffraktive Oberflächenrelief belegten Teilbereiche der Oberfläche während des Spritzgussvorgangs beispielsweise mit IMD-Folien oder IML-Etiketten (IMD = In Mould Decoration; IML = In Mould Labelling) zu dekorieren oder in einem nachfolgenden Prozessschritt anderweitig zu dekorieren und/oder mit weiteren funktionellen Beschichtungen zu versehen. Ebenso können die nicht durch das diffraktive Oberflächenrelief belegten Teilbereiche der Oberfläche in einem Mehrkomponenten-Spritzguss auch aus einem anderen Spritzgussmaterial, welches insbesondere nicht transparent ist, ausgebildet sein. Ebenso ist es möglich, dass die nicht durch das diffraktive Oberflächenrelief belegten Teilbereiche der Oberfläche hochglänzend und glatt und dadurch bevorzugt hochtransparent und klar durchsichtig sind.

Die mit dem diffraktiven Oberflächenrelief belegten Teilbereiche der Oberfläche sind durch das Oberflächenrelief nicht glatt oder hochglänzend und bilden daher einen optischen Kontrast zu beispielsweise benachbarten hochglänzend, glatten Oberflächen. Dieser Kontrast kann in manchen praktischen Fällen gewünscht sein, in anderen unerwünscht. Der Kontrast lässt sich im unerwünschten Fall beispielsweise durch Übergangsbereiche zwischen dem diffraktiven Oberflächenrelief und den benachbarten hochglänzenden, glatten Oberflächen etwas kaschieren, wobei die Übergangsbereiche geringfügig strukturiert sind und/oder eine sich abschwächende Strukturierung mit einer Abschwächung zu der hochglänzenden, glatten Oberfläche hin aufweist.

Vorzugsweise wird als Formeinsatz ein Formeinsatz bereitgestellt, dessen diffraktives Oberflächenrelief durch eine additive oder subtraktive Überlagerung einer diffraktiven Mikrostruktur und einer insbesondere gekrümmten Makrostruktur ausgebildet wird. Die Makrostruktur kann dabei als makroskopische Krümmung bzw. allgemein als beliebig ausgeformte Freiformfläche ausgebildet sein, auf der die diffraktive Mikrostruktur angeordnet ist.

Die Makrostruktur entspricht vorzugsweise der durch die gegenüberliegende Oberfläche des Kunststoffformteils definierten Oberflächenstruktur. Vorzugsweise ist die Makrostruktur so gewählt, dass der Abstand zwischen der durch die Makrostruktur definierten fiktiven makroskopischen Oberfläche des Kunststoffformteils und der gegenüberliegenden Oberfläche des Spritzgussformteils zumindest in einem nicht-ebenen Bereich des diffraktiven Oberflächenreliefs im Wesentlichen konstant ist, und vorzugsweise um nicht mehr als ±20%, weiter bevorzugt sich um nicht mehr als ±10% variiert. Beispielsweise variiert so die Wandstärke bei einem 2 mm bis 3 mm dicken Bauteil um nicht mehr als 0,4 mm. Damit wird eine weitgehend konstante Wanddicke des Spritzgussformteils erreicht, wodurch eine ausreichend gute Stabilität in allen Bereichen erreicht werden kann. Es entstehen dabei also keine Schwachstellen oder Sollbruchstellen. Dementsprechend sind auch die gegenüberliegenden Wandflächen der Kavität der Spritzgussform zumindest im Bereich des Formeinsatzes im Wesentlichen konstant beabstandet, so dass das Kunststoffformteil mittels des beschriebenen Verfahrens gefertigt werden kann.

Die diffraktive Mikrostruktur kann damit in beliebig geformte Oberflächen integriert werden. Insbesondere ist es damit möglich, eine diffraktive Struktur in ein bestehendes Bauteil einzubringen, ohne dass dessen Form angepasst bzw. speziell verändert werden muss. Ein besonderer Vorteil liegt darin, dass im Gegensatz zu bekannten Verfahren und Spritzgussformen hier ermöglicht wird, die diffraktive Mikrostruktur in gekrümmte Flächen einzubringen. Es muss also kein flacher bzw. ebener Bereich bereitgestellt werden, wenn eine diffraktive Mikrostruktur in ein Bauteil integriert werden soll. Die Designfreiheit bei der Entwicklung von Kunststoffformteilen mit diffraktiven Oberflächenreliefs wird also nicht eingeschränkt.

Auch größere Änderungen an bestehenden Spritzgusswerkzeugen sind nicht notwendig, lediglich der entsprechende Formeinsatz muss vorgesehen und eingesetzt werden. Dies ermöglicht eine besonders hohe Planungsflexibilität und geringe Umstellungskosten, wenn ein bestehendes Bauteil zukünftig mit einer diffraktiven Mikrostruktur versehen werden soll.

Unter Mikrostrukturen werden hier vorzugsweise Strukturen verstanden, deren Strukturelemente und/oder lokale Minima oder Maxima eine mittlere Beabstandung von weniger als 500 $\mu$m, bevorzugt von weniger als 100 $\mu$m, weiter bevorzugt von weniger als 10 $\mu$m aufweisen.

Eine diffraktive Mikrostruktur weist vorzugsweise eine Spatialfrequenz von mehr als 100 Linien/mm, vorzugsweise mehr als 300 Linien/mm, weiter bevorzugt zwischen 800 Linien/mm bis 2800 Linien/mm auf. Die Relieftiefe der diffraktiven Mikrostruktur beträgt vorzugsweise zwischen 50 nm und 100 $\mu$m, weiter bevorzugt zwischen 200 nm und 10 $\mu$m.

Bei der diffraktiven Mikrostruktur handelt es sich vorzugsweise um ein 2D/3D Hologramm, ein Kinoform, ein Fourier-Hologramm, ein speziell entsprechend der optischen Funktion berechnetes computergeneriertes Hologramm (CGH = Computer Generated Hologram), oder ein KINEGRAM® ,oder TRUSTSEAL® bestehend aus ein- oder zweidimensionalen periodischen Beugungsgittern, isotropen oder anisotropen Mattstrukturen (mit einer statistischen Variation der Strukturparameter), asymmetrischen Blazegitter mit kontinuierlicher oder stufenartiger Phasenfunktion (insbesondere 2, 4 oder 8 Stufen), um linsenartige Strukturen, oder um eine Kombinationsstruktur mit ein oder mehreren der vorgenannten Strukturen.

Die Mikrostruktur ist bzgl. ihrer Reliefparameter, insbesondere Spatialfrequenz und Relieftiefe, vorzugsweise so ausgelegt, dass in Auflichtbetrachtung und/oder Durchlichtbetrachtung ein optisch variabler Effekt generiert wird, welcher für den menschlichen Betrachter, ggf. unter Zuhilfenahme einer speziellen Lichtquelle (LED, Laserpointer, Punktlichtquelle in einer vorgegebenen Beabstandung usw.) sichtbar wird, wenn die Mikrostruktur in ein vorzugsweise transparentes Kunststoffmaterial mit vorzugsweise einem Brechungsindex von etwa 1,5 bis 1,6 abgeformt wird.

Unter Makrostrukturen werden vorzugsweise Strukturen verstanden, deren Strukturelement und/oder lokale Minima oder Maxima mehr als 10 $\mu$m, vorzugsweise mehr als 50 $\mu$m, weiter bevorzugt zwischen 100 $\mu$m und 500 $\mu$m voneinander beabstandet sind. Die Relieftiefe der Makrostrukturen beträgt vorzugsweise mehr als 0,5 $\mu$m, weiter bevorzugt mehr als 5 $\mu$m.

Es ist weiter zweckmäßig, wenn als Formeinsatz ein Formeinsatz bereitgestellt wird, dessen Makrostruktur eine zumindest bereichsweise gekrümmte Freiformfläche mit ein oder mehreren Krümmungen beschreibt, wobei die ein oder mehreren Krümmungen jeweils einen Krümmungsradius aufweisen, der mindestens das 100-fache und höchstens das 0,1-fache, bevorzugt mindestens das 10-fache und höchstens das 0,25-fache, besonders bevorzugt mindestens das 5-fache und höchstens das 0,33-fache der lateralen Ausdehnung des diffraktiven Oberflächenreliefs beträgt, und/oder die ein oder mehreren Krümmungen jeweils einen Krümmungsradius im Bereich von 10000 mm bis 10 mm, bevorzugt von 1000 mm bis 25 mm, besonders bevorzugt von 500 mm bis 33 mm aufweisen, insbesondere bei einer lateralen Ausdehnung von 100 mm. Größere Krümmungsradien, also flachere Freiformflächen, sind jedoch auch möglich. Die lokalen makroskopischen Krümmungen des diffraktiven Oberflächenreliefs sind im Wesentlichen durch die Außenform des Bauteils vorgegeben, abgeleitet aus der Forderung nach einer konstanten Wandstärke des Bauteils.

Unter der lateralen Ausdehnung des diffraktiven Oberflächenreliefs wird dabei der größte Abstand zwischen zwei auf der Randkurve des Oberflächenreliefs liegenden Punkten verstanden, also beispielsweise der Durchmesser bei einem kreisförmigen Oberflächenrelief oder die Länge der Diagonale bei einem rechteckigen Oberflächenrelief. Neben einer Kreisform oder einem Rechteck sind auch jegliche anders geformte Konturen des Oberflächenreliefs möglich, um insbesondere eine gestalterisch ansprechende Integration des Oberflächenreliefs in das Bauteil zu ermöglichen. Beispielsweise kann die Kontur des Oberflächenreliefs ein Vieleck oder ein Polygon sein oder bereichsweise durch stetige konvexe und/oder konkave Kurven, insbesondere mittels mathematischer Funktionsverläufe begrenzt sein.

Bei derartigen vorgenannten Krümmungsradien kann die diffraktive Mikrostruktur problemlos mit der Makrostruktur überlagert werden, ohne dass es zu nicht korrigierbaren Verzerrungen des gewünschten diffraktiven Effekts kommt.

Erfindungsgemäß wird beim Bereitstellen des Formeinsatzes zunächst ein vorläufiges diffraktives Oberflächenrelief in einer Oberfläche eines Substrats ausgebildet, insbesondere in ein flaches Metallteil, und anschließend das Substrat zur Ausbildung des Formeinsatzes umgeformt, wobei beim Umformen das vorläufige Oberflächenrelief in das diffraktive Oberflächenrelief des Formeinsatzes verformt wird.

Somit können bekannte Verfahren zum Einbringen von Oberflächenreliefs in flache Bauteile angewendet werden, ohne dass sie für gekrümmte Oberflächen angepasst werden müssen.

Das Umformen des Substrats erfolgt dabei vorzugsweise durch Tiefziehen. Dabei ist es zweckmäßig, wenn zum Tiefziehen ein Werkzeug verwendet wird, dessen Härte geringer ist als eine Härte des Werkstoffes des Substrats. Hierdurch wird sichergestellt, dass die diffraktive Mikrostruktur durch das Tiefziehwerkzeug nicht beschädigt wird.

Es ist vorteilhaft, wenn zum Ausbilden des vorläufigen Oberflächenreliefs zunächst ein Masterelement, insbesondere umfassend einen Resistlack, bereitgestellt wird, in welches das vorläufige Oberflächenrelief eingeformt wird und anschließend das Substrat von dem Masterelement abgeformt wird.

Sobald ein solches Masterelement bereitgestellt ist, können also auf einfache Weise eine Mehrzahl von Substraten als Kopien des Masterelements hergestellt werden. Dies vereinfacht die Herstellung verglichen mit dem direkten Einbringen des vorläufigen Oberflächenreliefs in jedes einzelne Substrat. Insbesondere ist das direkte Einbringen von Mikrostrukturen in Resistlacke deutlich einfacher als das direkte Einbringen von Mikrostrukturen in metallische Substrate.

Bevorzugt wird das vorläufige Oberflächenrelief durch Lithographieverfahren, wie Laserstrahllithographie oder Elektronenstrahllithographie oder durch Belichtung mittels einer Maske und UV-Belichtung in das Masterelement und/oder in das Substrat, in der Regel eine strahlungssensitive Resistlackschicht eingebracht (in diesem Fall durch Belichten und anschließendes Entwickeln). Dies ermöglicht ein besonders schnelles und flexibles Einformen des vorläufigen Oberflächenreliefs.

Vorzugsweise wird das vorläufige Oberflächenrelief als computergeneriertes Hologramm (speziell berechnet) und/oder als Kinoform (speziell berechnet) und/oder als Fourierhologramm (holographisch aufgezeichnet) in das Masterelement und/oder das Substrat eingebracht.

Nach dem Einformen des vorläufigen Oberflächenreliefs wird das Substrat bevorzugt durch galvanisches Abscheiden eines Metalls, insbesondere von Nickel, auf das Masterelement erzeugt. Hierdurch kann das vorläufige Oberflächenrelief mit hoher Qualität vom Masterelement auf das härtere Metallsubstrat übertragen werden. Zweckmäßigerweise wird dazu das Masterelement zunächst leitfähig gemacht, beispielsweise durch Auftragen eines leitfähigen Lacks. Anschließend kann das Metall durch Anlegen einer Spannung an das so beschichtete Masterelement in einem Galvanisierungsbad abgeschieden werden.

Die Schichtdicke des so abgeschiedenen Substrats beträgt dabei vorzugsweise 0,05 mm bis 1 mm. Solche Substrate sind einerseits haltbar genug, um in Formeinsätzen zum Spritzgießen verwendet werden zu können, andererseits aber auch dünn genug, um problemlos durch Tiefziehen umgeformt zu werden.

Bevorzugt wird zum Einformen des vorläufigen Oberflächenreliefs eine Korrekturfunktion K ermittelt und zur Bestimmung einer das vorläufige Oberflächenrelief beschreibenden Funktion F2 auf eine die zu erzielenden diffraktiven Effekte beschreibende Funktion F1 angewendet.

So ist es beispielsweise möglich, dass die Korrekturfunktion K die Veränderung bzw. die Verzerrung des vorläufigen Oberflächenreliefs bei der Verformung charakterisiert und beispielsweise so das makroskopische Oberflächenprofil definiert, welches durch die Verformung bei Verformung eines ebenen Oberflächenprofils bewirkt wird.

Aus der die zu erzielenden diffraktiven Effekten beschreibenden Funktion F1 kann damit zum Einen zunächst die hierzu abzuformende Mikrostruktur M bestimmt werden und im Weiteren diese Mikrostruktur gemäß der Korrekturfunktion K so vorverzerrt werden, dass die durch die Umformung bewirkte Verformung wieder ausgeglichen wird.

Beschreibt so beispielsweise die Korrekturfunktion K die durch die Verformung bewirkte Veränderung einer ebenen Oberfläche mittels einer entsprechenden Verzerrungsmatrix, so kann F2 beispielsweise wie folgt bestimmt werden:

$$F2 = K^{-1} * M\,(F1)$$

Weiter kann hierzu beispielsweise die ermittelte Mikrostruktur M mit einer Makrostruktur (multiplikativ) überlagert werden, die durch die invertierte Korrekturfunktion beschrieben wird und die beispielsweise die inverse Ausformung zu der von der Verformung bewirkten Verformung einer glatten Fläche (Makrostruktur) darstellt.

Vorzugsweise ist es weiter möglich, dass eine Korrekturfunktion K ermittelt wird, welche die durch die Verformung bewirkten optischen Effekte beschreibt, bzw. eine optische Funktion spezifiziert, welche notwendig ist, um die durch die Verformung bewirkten optischen Effekte zumindest teilweise auszugleichen. Wird so beispielsweise durch das Umformen das Substrat kugelförmig verformt, so kann die Korrekturfunktion K beispielsweise die optische Funktion einer entsprechenden Kugellinse bzw. invertierten Kugellinse beschreiben.

Es ist so zweckmäßig, wenn die Korrekturfunktion K die Veränderung der diffraktiven Effekte des vorläufigen Oberflächenreliefs durch die spätere Verformung des vorläufigen Oberflächenreliefs durch das Umformen beschreibt bzw. zumindest teilweise ausgleicht.

Diese Korrekturfunktion K wird vorzugsweise auf die hier zu erzielenden diffraktiven Effekte beschreibende Funktion F1 derart angewendet, dass die diffraktiven Effekte berechnet werden, welche bei Berücksichtigung der durch die Korrekturfunktion K beschriebenen optischen Effekte die gemäß F1 zu erzielenden diffraktiven Effekte erzielt und sodann hieraus das vorläufige Oberflächenrelief ermittelt wird.

Dies kann beispielsweise bei holographischer Generierung des vorläufigen Oberflächenreliefs dadurch realisiert werden, dass eine entsprechende Linse/Linsensystem, welches die optische Funktion der Korrekturfunktion erbringt, in den Objektstrahl oder Referenzstrahl eingebracht wird.

Die Funktion F1 beschreibt also, welcher optische Effekt im fertigen Kunststoffformteil auftreten soll. Würde auf der Basis der Funktion F1 die vorläufige Oberflächenstruktur in das Substrat eingeformt, so würde aufgrund der Verformung der vorläufigen Oberflächenstruktur beim Tiefziehen im fertigen Kunststoffformteil ggf. nicht der gewünschte optische Effekt erzielt, sondern beispielsweise ein verzerrtes Hologramm dargestellt. Durch die Anwendung der Korrekturfunktion K auf die Funktion F1 wird dies vermieden. Die erhaltene Funktion F2 beschreibt somit, welche vorläufige Oberflächenstruktur in das Substrat eingebracht werden muss, um nach der Verformung eine diffraktive Oberflächenstruktur zu erhalten, die den gewünschten Effekt erzeugt.

Es ist weiter vorteilhaft, wenn der Formeinsatz mittels eines Klemmelements in der Spritzgussform befestigt wird. Auf diese Weise wird ein sicherer Halt des Formeinsatzes während des Spritzgießens sichergestellt. Der Formeinsatz wird dabei bevorzugt durch das Klemmelement allseitig umgriffen und insbesondere kraftschlüssig und/oder formschlüssig gehalten.

Es ist ferner zweckmäßig, wenn der Formeinsatz an einem Hinterschnitt der Spritzgussform gehalten wird. Auch so ergibt sich eine kraftschlüssige und/oder formschlüssige Befestigung, die zudem den Vorteil mit sich bringen kann, dass der Formeinsatz bündig mit der Oberfläche der Kavität abschließt, so dass sich kein Absatz am fertigen Kunststoffformteil ergibt.

Zusätzlich oder alternativ kann der Formeinsatz auch mit der Spritzgussform verklebt werden, um einen besonders sicheren Halt zu gewährleisten.

Zur Befestigung des Formeinsatzes ist dabei vorzugsweise eine entsprechende Aufnahme in der Spritzgussform vorgesehen. Es ist dabei zweckmäßig, wenn in dieser Aufnahme zumindest ein Stempel vorgesehen ist, mittels welchem bei eingesetztem Formeinsatz ein vorgegebener Anpressdruck auf die der Kavität abgewandte Seite des Formeinsatzes ausübbar ist. Hierdurch wird verhindert, dass sich der Formeinsatz während des Spritzgießens durchbiegt, was zu einer Verformung des Oberflächenreliefs und damit zum Verlust der gewünschten optischen Eigenschaften des Kunststoffformteils führen würde.

Es ist weiter zweckmäßig, wenn der Formeinsatz zumindest eine Markierung umfasst, anhand derer die korrekte Orientierung des Formeinsatzes erkennbar ist, wenn dieser in der Spritzgussform eingesetzt ist. Die Orientierung des Formeinsatzes bestimmt auch die Orientierung des gewünschten optischen Effekts. Je nach Art des optischen Effekts kann die korrekte Orientierung bzw. Ausrichtung von Wichtigkeit sein. Für bestimmte optische Effekte kann die Orientierung allerdings auch beliebig sein.

Alternativ zur direkten Montage des Formeinsatzes in der Spritzgussform kann auch eine Haltevorrichtung für den Formeinsatz vorgesehen sein, welche so in eine Formhälfte einer Spritzgussform, welche zusammen mit wenigstens einer weiteren Formhälfte eine Kavität zum Herstellen des Kunststoffformteils ausbildet, einsetzbar ist, dass das diffraktive Oberflächenrelief eines in der Haltevorrichtung gehaltenen Formeinsatzes einen Teilbereich der von der Formhälfte gebildeten Oberfläche der Kavität der Spritzgussform ausbildet, wobei die Haltevorrichtung einen insbesondere zylindrischen Grundkörper umfasst, in welchen der Formeinsatz eingesetzt ist. Dies vereinfacht die Handhabung des Formeinsatzes und schützt ihn vor Beschädigungen, da er insbesondere bei der Montage nicht mehr direkt berührt werden muss.

Vorzugsweise weist der Grundkörper zumindest einen Hinterschnitt zum Halten des Formeinsatzes und/oder zumindest einen Klebeflansch zum Verkleben des Formeinsatzes mit der Spritzgussform auf. Alternativ oder zusätzlich kann auch ein Klemmelement zum Halten des Formeinsatzes vorgesehen sein. Die Befestigung des Formeinsatzes im Grundkörper entspricht damit der oben beschriebenen direkten Befestigung des Formeinsatzes in der Spritzgussform.

Es ist weiter vorteilhaft, wenn die Haltevorrichtung mittels eines Deckels verschlossen werden kann. Bei montiertem Formeinsatz verschließt dann der Deckel eine Stirnseite des zylindrischen Grundkörpers, während die andere Stirnseite durch den Formeinsatz verschlossen ist. Es ergibt sich so eine kompakte Vorrichtung, die auf einfache Weise in die Spritzgussform einsetzbar ist und stabil dort gehalten werden kann.

Der verbleibende Hohlraum im Inneren des Grundkörpers kann mittels eines geeigneten Stempels ausgefüllt werden, so dass der Formeinsatz keinen Bewegungsspielraum hat und beim Spritzgießen nicht verformt wird. Ferner können am Grundkörper noch Anschlagelemente vorgesehen sein, die sicherstellen, dass der Grundkörper lagerichtig in der Spritzgussform montierbar ist, bzw. die einen Anschlag für den Formeinsatz ausbilden, so dass auch dessen lagerichtiger Sitz sichergestellt ist.

Vorzugsweise ist ein so hergestelltes Kunststoffformteil aus einem transparenten oder opaken Kunststoff, insbesondere aus PMMA, PET-G, ABS oder PC ausgebildet.

Kunststoffformteile der beschriebenen Art eignen sich für vielfältige Anwendungen. So kann das Kunststoffformteil beispielsweise Bestandteil einer Beleuchtungsvorrichtung, insbesondere für einen Kraftwagen, sein. Durch das diffraktive Oberflächenrelief kann dort ein optisch schwebend erscheinendes Motiv z.B. ein Logo, Symbol, Musterung oder dergleichen projiziert werden. Auch in hinterleuchteten Schaltern oder anderen Bedienungselementen können solche Kunststoffformteile verwendet werden. Hier können durch das diffraktive Oberflächenelement beispielsweise schwebende Symbole angezeigt werden, die die Funktion des jeweiligen Bedienungselements verdeutlichen.

Im Folgenden wird die Erfindung anhand eines Ausführungsbeispiels und der Zeichnung beispielhaft erläutert. Dabei zeigen:

Fig. 1    Ein Ausführungsbeispiel eines Formeinsatzes, der mittels einer Klemmbefestigung in einer Spritzgussform befestigt ist;

Fig. 2    Ein Ausführungsbeispiel eines Formeinsatzes, der mittels einer Klebebefestigung in einer Spritzgussform befestigt ist;

Fig. 3    Ein Ausführungsbeispiel eines Formeinsatzes während der Umformung durch Tiefziehen;

Fig. 4    Eine schematische Darstellung eines Kunststoffformteils in Funktion;

Fig. 5    Eine schematischen Darstellung eines Stempels mit einem Formeinsatz;

Fig. 6    Eine schematische Darstellung der Krümmungsgeometrie eines Ausführungsbeispiels eines Formeinsatzes.

Um in ein Kunststoffformteil 1 ein diffraktives Oberflächenrelief 2 einzuformen, wird ein Formeinsatz 3 in eine Aufnahme 4 einer Spritzgussform 5 eingesetzt. Der Formeinsatz 3 weist auf seiner im eingesetzten Zustand einer Kavität 51 der Spritzgussform zugewandten Oberfläche 31 das abzuformende Oberflächenrelief 32 auf. Nach Verschließen der Spritzgussform 5 wird die Kavität 51 mit der Gussmasse befüllt, so dass das Oberflächenrelief 32 im Kunststoffformteil 1 abgeformt wird.

Das Oberflächenrelief 32 bildet dabei nur einen Teilbereich der Oberfläche 52 der Kavität 51 aus. Mit anderen Worten verbleibt ein Teil der Oberfläche 11 des Kunststoffformteils 1 glatt.

Bei dem diffraktiven Oberflächenrelief 2 kann es sich um ein computergeneriertes Hologramm, ein Fourierhologramm oder eine Kinoform handeln. Im Durchlicht kann so ein schwebendes Abbild eines Motivs wie eines Symbols, Logos, Zeichens, Bildes oder dergleichen erzeugt werden. Bevorzugt weist das Relief eine Spatialfrequenz zwischen 100 Linien/mm und 3000 Linien/mm und/oder eine Relieftiefe von 100 nm bis 10 μm auf.

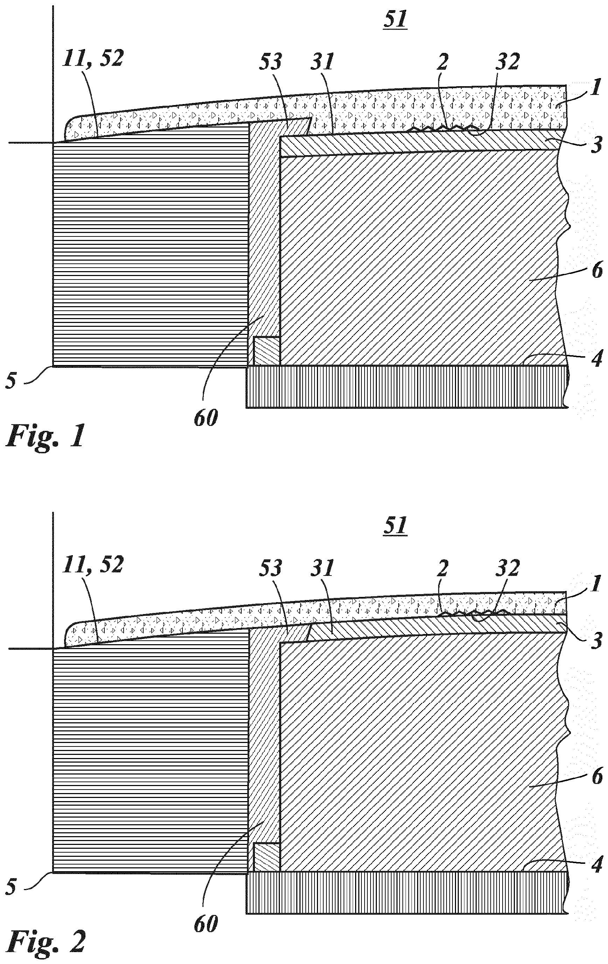

Figuren 1 und 2 zeigen unterschiedliche Befestigungsarten des Formeinsatzes 3 in der Spritzgussform 5. In der Variante gemäß Fig. 1 wird der Formeinsatz 3 durch einen Stempel 6 an einem Hinterschnitt 53 einer Stempelhülse 60 kraftschlüssig gehalten. Dabei entsteht in der gezeigten Ausführungsform zwischen Formeinsatz 3 ein Absatz bzw. Spalt zwischen der benachbarten Oberfläche der Stempelhülse 60 und dem Oberflächenrelief 32 auf dem Formeinsatz 3. In der Variante gemäß Fig. 2 ist der Formeinsatz 3 mittels eines Hinterschnitts formschlüssig und vorteilhafterweise bündig abschließend mit der benachbarten Oberfläche der Stempelhülse 60 in der Stempelhülse 60 befestigt und zusätzlich mit dem Stempel 6 verklebt. Diese Befestigung mittels Hinterschnitt hat den Vorteil, dass anders als bei der Variante gemäß Fig. 1 kein Spalt verbleibt, der zu einem Absatz am Kunststoffformteil 1 führt. Die zusätzliche Verklebung führt zu einer noch besseren Fixierung des Formeinsatzes 3 auf dem Stempel 6. Die den Stempel 6 aufnehmende Stempelhülse 60 ist in der Aufnahme 4 der Spritzgussform 5 eingesetzt und dort befestigt, vorzugsweise verschraubt.

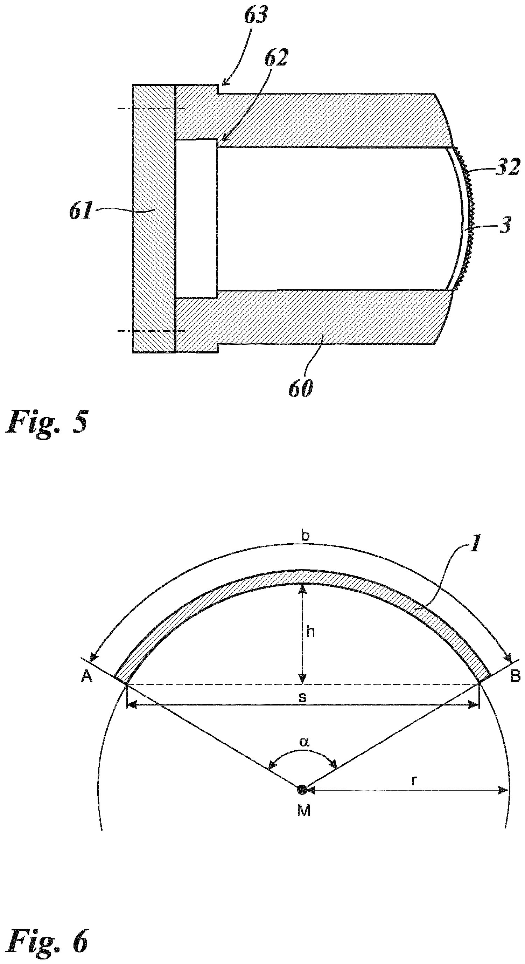

Fig. 5 zeigt den Stempel 6 mit dem darauf befestigten Formeinsatz 3. Der Stempel 6 ist so ausgebildet, dass er in eine entsprechend ausgeformte Stempelhülse 60 passend eingesetzt werden kann. Dazu weist der Stempel 6 an seiner Unterseite einen Anschlag 62 auf, damit der Stempel 6 nur bis zu einer gewünschten Tiefe in die Stempelhülse 60 eintaucht und dadurch der Formeinsatz 3 auf der gegenüberliegenden Seite in der gewünschten Art und Weise mit der benachbarten Oberfläche der Stempelhülse 60 zusammenwirkt. Die Stempelhülse 60 wird mit einem Deckel 61 auf der Unterseite verschlossen, insbesondere verschraubt, um auch den Stempel 6 in der Stempelhülse 60 zu befestigen. Die Stempelhülse 60 wird anschließend in die Aufnahme 4 in der Spritzgussform 5 eingesetzt und dort wiederum mittels Verschraubung befestigt. Auch die Stempelhülse 60 weist einen Anschlag 63 auf, um nur bis zu einer gewünschten Tiefe in die Aufnahme 4 der Spritzgussform 5 einzutauchen und in der Kavität 51 wunschgemäß mit der benachbarten Oberfläche der Kavität 51 zusammenzuwirken.

Dabei beträgt die Toleranz bzw. das Spiel zwischen Aufnahme 4 und Stempelhülse 60 und zwischen Stempelhülse 60 und Stempel 6 bevorzugt etwa 0,01 mm bis 0,05 mm, insbesondere 0,02 mm bis 0,03 mm.

Zur Herstellung des Formeinsatzes 3 wird zunächst ein flacher Master erzeugt, der eine Schicht aus einem Resistlack umfasst. In diese Schicht wird ein vorläufiges Oberflächenrelief 7 einbelichtet. Dies kann beispielsweise mittels eines Laser- oder Elektronenstrahls oder durch Belichtung mit einer Maske erfolgen. Hierdurch lässt sich eine Detailauflösung von etwa einem Mikrometer erreichen. Es sind dabei Einfach- oder Mehrfachbelichtungen möglich, die in insbesondere zwei-, vier- oder achtstufigen Oberflächenprofilen resultieren können. Der Resistlack wird dann entwickelt, so dass das vorläufige Oberflächenrelief gebildet wird.

Anschließend wird der Resistlack mit einem leitfähigen Lack beschichtet. In einem Galvanisierungsbad wird eine elektrische Spannung an die leitfähige Lackschicht angelegt und ein Metall, vorzugsweise Nickel, auf den Master abgeschieden. Die Schichtdicke beträgt dabei 0,05 mm bis 1 mm. Der so erzeugte Metallkörper weist nun ebenfalls das vorläufige Oberflächenrelief auf. Von diesem Metallkörper können wiederum galvanisch Kopien angefertigt werden.

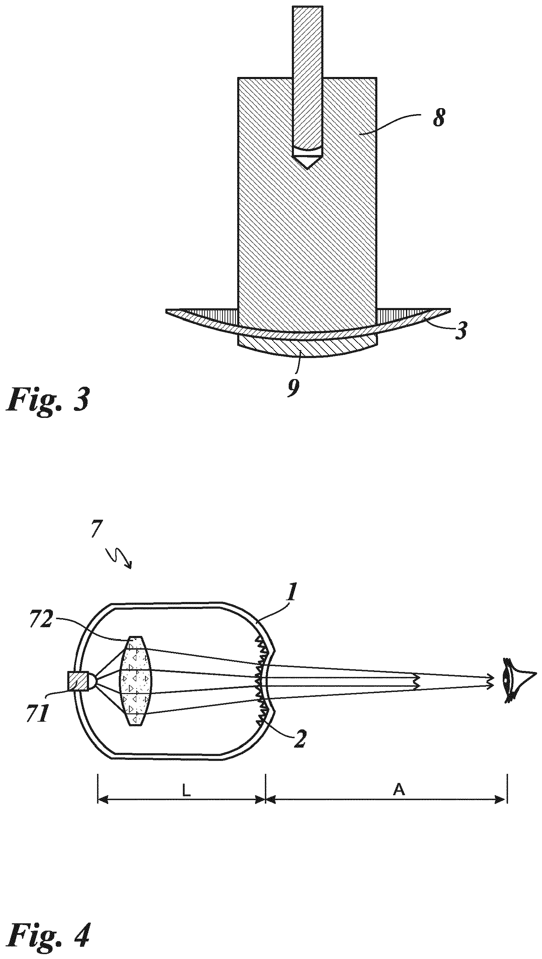

Um beliebig geformte Kunststoffformkörper 1 mit einer diffraktiven Oberflächenstruktur 2 versehen zu können, muss dieser Metallkörper nun an die Form des herzustellenden Kunststoffformkörpers angepasst werden. Wie Fig. 3 zeigt, erfolgt dies durch Tiefziehen. Hierbei wird der Metallkörper zwischen einem Stempel 8 und einem Gegenhalter 9 verformt, bis er die gewünschte Form erhält. Der so erhaltene Formeinsatz 3 kann gegebenenfalls noch weiter zugeschnitten und mit Befestigungselementen versehen werden. Für Stempel 8 und Gegenhalter 9 wird dabei ein Material verwendet, welches weicher ist als der Metallkörper. Besteht dieser aus Nickel, so werden beispielsweise Tiefziehwerkzeuge aus Stahl verwendet. Dadurch wird das vorläufige Oberflächenrelief 7 nicht beschädigt.

Beim Tiefziehen können gewölbte Oberflächen mit Krümmungsradien, der mindestens das 100-fache und höchstens das 0,1-fache, bevorzugt mindestens das 10-fache und höchstens das 0,25-fache, besonders bevorzugt mindestens das 5-fache und höchstens das 0,33-fache der lateralen Ausdehnung des diffraktiven Oberflächenreliefs beträgt, erzeugt werden. Die Krümmungsradien können dabei im Bereich von 10000 mm bis 10 mm, bevorzugt von 1000 mm bis 25 mm, besonders bevorzugt von 500 mm bis 33 mm liegen, insbesondere bei einer lateralen Ausdehnung von 100 mm.

Für Oberflächenreliefs 2 mit einem Durchmesser von 50 mm können beispielsweise Ziehtiefen von 4,8 mm bei einer Dicke des Formeinsatzes 3 von 0,5 mm bis 1 mm oder Ziehtiefen von 2,4 mm bei einer Dicke des Formeinsatzes 3 von 0,5 mm erreicht werden. Bei einem Durchmesser des Oberflächenreliefs 2 von 100 mm können beispielsweise Ziehtiefen von 10 mm bei einer Dicke des Formeinsatzes 3 von 0,5 mm erreicht werden.

Der Zusammenhang zwischen der Höhe h des Scheitels der resultierenden Fläche über einer fiktiven Grundebene des Formeinsatzes 3 und dem Krümmungsradius r ist in Fig. 6 für eine einfache kugelförmige Umformgeometrie dargestellt. Bei einer lateralen Ausdehnung s des gekrümmten Bereichs ergibt sich ein Krümmungsradius von

$$r = \frac{4h^2 + s^2}{8h}.$$

Bei einem Durchmesser des Oberflächenreliefs von 100 mm und einer Ziehtiefe h von 11 mm ergibt sich damit ein Krümmungsradius von ca. 119 mm, bei einer Ziehtiefe von 33 mm resultiert ein Krümmungsradius von 54 mm. Bei komplexeren Freiformflächen besteht dieser einfache Zusammenhang jedoch nicht notwendigerweise.

Durch das Tiefziehen wird das vorläufige Oberflächenrelief 7 verformt und verändert damit seine optischen Eigenschaften. Dies muss bei der Gestaltung des vorläufigen Oberflächenreliefs 7 berücksichtigt werden. Aus diesem Grund muss ein vorläufiges Oberflächenrelief 7 erzeugt werden, welches nach der Verformung das gewünschte diffraktive Oberflächenrelief 2 ergibt.

Um dies zu erreichen, wird zunächst eine Funktion F1 ermittelt, die den gewünschten diffraktiven Effekt wiedergibt. Solche Funktionen können beispielsweise auf die folgende Art berechnet und dargestellt werden: Die Berechnungsmethode für das CGH (CGH = Computer Generated Hologram) basiert auf dem Punktlichtquellenprinzip, wobei das zu projizierende Element (z.B. Stern) in selbstleuchtende Punktlichtquellen zerlegt wird und anschließend für jede dieser Punktlichtquellen ein Hologramm berechnet wird. Das Gesamthologramm wird dann aus der Überlagerung aller Einzelhologramme berechnet. Die somit resultierende Gesamtphasenfunktion wird in eine diffraktive Phasenfunktion umgerechnet für die Designwellenlänge (z.B. rote LED, Wellenlänge 640 nm). Je nach Auflösung der Lithographiemethode, die zur Herstellung des diffraktiven Oberflächenreliefs auf Basis der resultierenden diffraktiven Phasenfunktion verwendet wird, beispielsweise Laserstrahllithographie mit einer resultierenden "minimum feature size" von ca. 1 $\mu$m, wird dann das diffraktive Oberflächenrelief näherungsweise in ein Photoresistlacksystem einbelichtet. Die "minimum feature size" bestimmt hierbei die kleinstmöglichen Strukturgrößen und somit die größtmöglichen diffraktiven Beugungswinkel bzw. größtmöglichen zusätzlichen Fokussierfunktionen.

Weiter wird eine Korrekturfunktion K ermittelt, die die Veränderung des vorläufigen Oberflächenreliefs bei der Verformung oder den durch die Verformung bewirkten optischen Effekt charakterisiert.

Bei einer einfachen kugelförmigen Wölbungsgeometrie des Formeinsatzes 3 ergibt sich beispielsweise eine Korrekturfunktion K in Form einer entsprechend entgegengesetzt geformten kugelförmigen Wölbungsgeometrie.

Die Korrekturfunktion K wird bei Berechnung der diffraktiven Gesamtphasenfunktion mittels CGH so angewendet, dass eine der Wölbungsgeometrie des Formeinsatzes 3 entgegengesetzt ausgebildete Korrekturphasenfunktion berücksichtigt wird.

Besonders einfach ist die Korrektur dabei, wenn die Symmetrie der Wölbung des Formeinsatzes 3 auf die Symmetrie des durch das diffraktive Oberflächenrelief 2 darzustellenden Motivs abgestimmt ist. Beispielsweise kann ein rotationssymmetrisches Motiv und eine entsprechend ähnliche rotationssymmetrische Wölbung des Formeinsatzes 3 so überlagert werden, dass die beiden Symmetriezentren übereinander liegen. Ein konkretes Beispiel ist eine Wölbung in Form eines Kugelsektors und ein Motiv in Form eines Sterns. Bevorzugt liegen dabei das Zentrum des Kugelsektors und das Zentrum des Sterns übereinander. Dadurch bleiben Verzerrungen des Sterns durch die zusätzliche Verwölbung optisch weitgehend unproblematisch und beeinflussen oder beeinträchtigen den optischen Effekt nur sehr wenig. In anderen konkreten Fällen kann man durch Analysieren der Symmetrie der Wölbung und des Motives ähnliche Lösungen finden, bei denen die Wölbung nur geringe störende Wirkung auf den gewünschten optischen Effekt hat.

Kritische Größen bei der Korrektur der Verzerrung sind insbesondere der Krümmungsradius R des diffraktiven Oberflächenreliefs 2, die laterale Ausdehnung Ld des diffraktiven Oberflächenreliefs 2, die laterale Ausdehnung Li des in Transmission projizierten Intensitätsmusters und der Divergenzwinkel der Lichtquelle. Für praktisch relevante Fälle kann dabei angenommen werden, dass Ld ungefähr Li entspricht. Eine Korrektur ist im Bereich von Ld/R <= 2 problemlos möglich.

Durch die Anwendung der Korrekturfunktion K auf die Funktion F1 kann eine weitere Funktion F2 errechnet werden, die das vorläufige Oberflächenrelief 7 darstellt. Wird das so berechnete vorläufige Oberflächenrelief 7 in den Metallkörper eingebracht, so erhält man im fertigen Formeinsatz 3 und damit auch im Kunststoffformteil 1 ein diffraktives Oberflächenrelief 2, welches den gewünschten diffraktiven Effekt zeigt.

Bei der Berechnung der Oberflächenreliefs 2 und 7 können ferner noch weitere Parameter berücksichtigt werden, die für den gewünschten Anwendungszweck des Kunststoffformteils 1 von Bedeutung sind. Soll das Kunststoffformteil beispielsweise an einer Beleuchtungsvorrichtung angebracht werden, so dass im Durchlicht eine optisch schwebendes Symbol erzeugt wird, können hier noch Betrachtungsabstand, Betrachtungswinkel, Abstand der Lichtquelle, Divergenzwinkel der Lichtquelle und evtl. noch vorhandene Fokussierungsoptiken berücksichtigt werden. Auch eine eigene Fokussierungsfunktion kann rechnerisch in das diffraktive Oberflächenrelief 7 integriert werden. Besonders gute Ergebnisse werden durch eine Kombination von integrierter Fokussierungsfunktion mit einer Teilfokussierung durch eine externe Optik erreicht. Der Divergenzwinkel (Halbwinkel) der Lichtquelle sollte dabei im Bereich von 5° bis 60° liegen.

Nachdem der Formeinsatz 3 auf die beschriebene Weise erzeugt und in die Spritzgussform eingesetzt wurde, kann das Kunststoffformteil 1 durch Spritzgießen erzeugt werden. Soll der diffraktive Effekt im Durchlicht sichtbar sein, so müssen transparente Kunststoffe, wie beispielsweise PMMA (Transmission 92%), PET-G (Transmission 91 %), ABS (Transmission 85%) oder PC (Transmission 88 %) verwendet werden. Es können jedoch auch im Auflicht betrachtbare Oberflächenstrukturen eingebracht werden, die mit opaken oder semitransparenten Kunststoffen oder bei Insert-Molding-Verfahren Anwendung finden können. Hierbei ist zu beachten, dass die Strukturtiefen des diffraktiven Oberflächenreliefs für Elemente in Transmission ein Vielfaches größer sein müssen als für Elemente, die in Reflexion arbeiten. Beispielsweise liegen Strukturtiefen des diffraktiven Oberflächenreliefs für Elemente in Transmission bei etwa 0,5 $\mu$m bis 3 $\mu$m und die Strukturtiefen des diffraktiven Oberflächenreliefs für Elemente in Reflexion bei etwa 0,1 $\mu$m bis 0,5 $\mu$m. Außerdem können solche opaken Kunststoffe vorteilhafterweise eine reflexionserhöhende Schicht enthalten, um die Sichtbarkeit und Brillanz des optischen Effekts des diffraktiven Oberflächenreliefs zu erhöhen.

Beim Spritzgießen treten üblicherweise Drücke von 800 bar bis 2000 bar und Temperaturen zwischen 220°C und 320°C auf. Der beschriebene Formeinsatz 3 hält solchen Bedingungen problemlos stand. Ein Austausch ist allenfalls nach etwa 10000 bis 50000 Gussvorgängen notwendig, insbesondere im Rahmen einer auch ansonsten notwendigen üblichen Wartung des Spritzgusswerkzeugs.

Das Einsetzen des Formeinsatzes 3 beeinflusst die Zykluszeit des Gießvorgangs nicht nachteilig. Diese hängt vorwiegend von der Geometrie und Größe, sowie von der Wandstärke des Kunststoffformteils 1 ab, weil durch diese Größen, insbesondere vor allem durch die Wandstärke, die Abkühlzeit des Spritzgussmaterials bestimmt wird. Die Zykluszeit des Gießvorgangs beträgt üblicherweise zwischen 5 Sekunden und 180 Sekunden, insbesondere zwischen 10 Sekunden und 180 Sekunden.

Fig. 4 zeigt ein Kunststoffformteil 1 in Funktionsstellung, d.h. mit einer Lichtquelle 7, hier eine LED (LED = Light Emitting Diode) mit einem optischen Fokussierelement, hier eine doppelkonvexe Sammellinse 8. Das diffraktive Oberflächenrelief 2 wird dadurch mittels Licht durchstrahlt, welches mittels Fokussierelement die gewünschte Divergenz aufweist. Lichtquelle 7 und diffraktives Oberflächenrelief 3 sind in einem Abstand L angeordnet. Bevorzugt ist der Abstand L etwa 0,5 cm bis etwa 10 cm groß. Durch das das diffraktive Oberflächenrelief 2 durchstrahlende Licht wird ein optischer Effekt 73 erzeugt, der im Betrachtungsabstand A mit dem unbewaffneten menschlichen Auge, d.h. ohne weitere Hilfsmittel erkennbar ist. Der Betrachtungsabstand A ist bevorzugt etwa 20 cm bis 500 cm groß. Der Effekt 73 ist jedoch auch außerhalb dieses Bereichs sichtbar.

Um den konkret gezeigten Effekt 73, einen fünfstrahligen Stern zu erzeugen, wird eine quasi-kontinuierliche, diffraktive Phasenfunktion als computergeneriertes Hologramm berechnet, die in diffraktiven Reliefstrukturen mit kleinsten lokalen Gitterperioden von ca. 5 $\mu$m bis 10 $\mu$m und Strukturtiefen von ca. 1 $\mu$m bis 1,5 $\mu$m resultiert. Das diffraktive Oberflächenrelief 2 beinhaltet, wie bereits beschrieben, die restliche für die gewünschte Divergenz des Lichts bzw. den gewünschten optischen Effekt nötige Korrektur des Strahlverlaufs des Lichts, wobei diese Korrektur auf den Verlauf der Makrostruktur (in diesem Beispiel ist die Bauteilkrümmung eine kugelige Verformung) angepasst ist.

Es ergibt sich so die in Fig. 4 gezeigte Leuchtvorrichtung 7. Als Lichtquelle 71 zur Beleuchtung bzw. Hinterleuchtung des transparenten Kunststoffmaterials des Kunststoffformkörpers 1 wird eine rote LED mit einem Divergenzwinkel (Halbwinkel) von 45 Grad verwendet. Zur Erzeugung von näherungsweise kollimierten Licht bzw. zur Verkleinerung des Divergenzwinkels des LED-Lichts, so dass das Licht an den Verlauf der Makrostruktur angepasst ist, ist die zusätzliche Fokussieroptik 72 als Konvexlinse mit einer Brennweite von 40 mm und einem Durchmesser von 20 mm ausgebildet. Der Abstand zwischen der LED 71 und der Fokussieroptik 72 beträgt 10 mm, der Abstand zwischen der Fokussieroptik 72 und dem diffraktiven Oberflächenrelief 2 beträgt ca. 40 mm.

Im Bereich des diffraktiven Oberflächenreliefs 2 bildet die Oberfläche des Kunststoffformteils 1 eine Kugelschale mit 120 mm Krümmungsradius aus. Das diffraktive Oberflächenrelief 3 ist kreisförmig mit einem Durchmesser von etwa 35 mm. Es ergibt sich ein optischer Effekt 73 in Form eines Sterns mit einer Größe von ca. 30 mm x 30 mm, der vom Betrachter aus gesehen scheinbar ca. 5 cm bis 10 cm hinter der diffraktiven Oberflächenstruktur 2 liegt. Der ideale Betrachterabstand beträgt ca. 4 m bis 5 m vor der diffraktiven Oberflächenstruktur 2; der Betrachter kann dabei zu der optischen Achse leicht versetzt positioniert sein, z.B. leicht erhöht oder auch niedriger.

Auf die beschriebene Art und Weise lassen sich vielfältige Kunststoffformteile 1 herstellen. Da das diffraktive Oberflächenrelief 2 auf einer beliebigen Freiformfläche angeordnet sein kann, wird die Designfreiheit beim Entwurf des Kunststoffformteils nicht beeinträchtigt. Insbesondere können so diffraktive Effekte in schon bestehende Entwürfe integriert werden, ohne dass weitere Änderungen notwendig werden.

Da das diffraktive Oberflächenrelief 2 lediglich einen Teilbereich der Oberfläche 11 des Kunststoffformteils 1 einnimmt, können auch noch weitere optische oder anderweitige Funktionen in das Kunststoffformteil integriert werden.

Mögliche Anwendungen sind beispielsweise Leuchtvorrichtungen, die optisch schwebende Motive projizieren (scheinbar vor oder hinter der Ebene des Bauteils liegend), hinterleuchtete Schalter oder Bedienelemente deren Funktion durch ein optisch schwebendes Symbol angezeigt wird, und dergleichen.

**Patentansprüche**

1. Verfahren zum Herstellen eines Kunststoffformteils (1), wobei bei dem Verfahren ein Formeinsatz (3) mit einem diffraktiven Oberflächenrelief (32) bereitgestellt wird, der Formeinsatz (3) in eine Formhälfte einer Spritzgussform (5) eingesetzt wird, welche zusammen mit wenigstens einer weiteren Formhälfte eine Kavität zum Herstellen des Kunststoffformteils (1) ausbildet, wobei der Formeinsatz (3) so in die Spritzgussform (5) eingesetzt wird, dass das diffraktive Oberflächenrelief (32) einen Teilbereich der von der Formhälfte (5) gebildeten Oberfläche der Kavität ausbildet, und das Kunststoffformteil (1) durch Spritzgießen mittels der Spritzgussform (5) abgeformt wird, wobei beim Bereitstellen des Formeinsatzes (3) zunächst ein vorläufiges diffraktives Oberflächenrelief in einer Oberfläche eines Substrats ausgebildet wird und anschließend das Substrat zur Ausbildung des Formeinsatzes (3) umgeformt wird, wobei beim Umformen das vorläufige Oberflächenrelief in das diffraktive Oberflächenrelief (32) des Formeinsatzes (3) verformt wird.

2. Verfahren nach Anspruch 1,
   **dadurch gekennzeichnet,**
   **dass** als Formeinsatz (3) ein Formeinsatz (3) bereitgestellt wird, dessen diffraktives Oberflächenrelief (32) durch eine additive oder subtraktive Überlagerung einer diffraktiven Mikrostruktur und einer gekrümmten Makrostruktur ausgebildet wird.

3. Verfahren nach Anspruch 2,
**dadurch gekennzeichnet,**
**dass** als Formeinsatz (3) ein Formeinsatz (3) bereitgestellt wird, dessen Makrostruktur eine zumindest bereichsweise gekrümmte Freiformfläche mit ein oder mehreren Krümmungen beschreibt, wobei die ein oder mehreren Krümmungen jeweils einen Krümmungsradius aufweisen, der mindestens das 100-fache und höchstens das 0,1-fache der lateralen Ausdehnung des diffraktiven Oberflächenreliefs beträgt, und/oder die ein oder mehreren Krümmungen jeweils einen Krümmungsradius im Bereich von 10000 mm bis 10 mm, bevorzugt von 1000 mm bis 25 mm aufweisen.

4. Verfahren nach einem der vorhergehenden Ansprüche,
**dadurch gekennzeichnet,**
**dass** zum Ausbilden des vorläufigen Oberflächenreliefs zunächst ein Masterelement, insbesondere umfassend einen Resistlack, bereitgestellt wird, in welches das vorläufige Oberflächenrelief eingeformt wird und anschließend das Substrat von dem Masterelement abgeformt wird, wobei das vorläufige Oberflächenrelief durch Lithographie und/oder mittels eines Laser- oder Elektronenstrahls und/oder durch Belichtung mittels einer Maske in das Masterelement und/oder in das Substrat eingeformt wird.

5. Verfahren nach Anspruch 4,
**dadurch gekennzeichnet,**
**dass** nach dem Einformen des diffraktiven Oberflächenreliefs das Substrat durch galvanisches Abscheiden eines Metalls auf das Masterelement erzeugt wird, wobei von dem erzeugten Substrat weitere Substrate durch galvanisches Abscheiden eines Metalls erzeugt werden.

6. Verfahren nach einem der vorhergehenden Ansprüche,
**dadurch gekennzeichnet,**
**dass** zum Einformen des vorläufigen Oberflächenreliefs eine Korrekturfunktion (K) ermittelt und zur Bestimmung einer das vorläufige Oberflächenrelief beschreibenden Funktion (F2) auf eine die zu erzielenden diffraktiven Effekte beschreibende Funktion (F1) angewendet wird, wobei die Korrekturfunktion (K) insbesondere die Veränderung der diffraktiven Effekte des vorläufigen Oberflächenreliefs durch die spätere Verformung des vorläufigen Oberflächenreliefs durch das Umformen beschreibt bzw. zumindest teilweise ausgleicht.

7. Verfahren nach einem der vorhergehenden Ansprüche,

**dadurch gekennzeichnet,**
**dass** der Formeinsatz (3) mittels eines Klemmelements in der Spritzgussform (5) befestigt und/oder an einem Hinterschnitt der Spritzgussform gehalten und/oder mit der Spritzgussform (5) verklebt wird.

## Claims

1. Method for producing a plastics moulding (1), wherein, in the method, a mould insert (3) with a diffractive surface relief (32) is provided, the mould insert (3) is inserted into one mould half of an injection mould (5) which, together with at least one further mould half, forms a cavity for producing the plastics moulding (1), wherein the mould insert (3) is inserted into the injection mould (5) such that the diffractive surface relief (32) forms a partial region of the surface of the cavity formed by the mould half (5), and the plastics moulding (1) is moulded by injection moulding by means of the injection mould (5), wherein, during the provision of the mould insert (3), first a provisional diffractive surface relief is formed in a surface of a substrate, and then the substrate is reshaped to form the mould insert (3), wherein, during the reshaping, the provisional surface relief is deformed into the diffractive surface relief (32) of the mould insert (3).

2. Method according to claim 1,
**characterised in that**
the mould insert (3) is provided by a mould insert (3) with a diffractive surface relief (32) formed by an additive or subtractive superimposition of a diffractive microstructure and a curved macrostructure.

3. Method according to claim 2,
**characterised in that**
the mould insert (3) is provided by a mould insert (3) with a macrostructure describing a free-form surface which is curved, at least in regions, and which has one or more curvatures, wherein the one or more curvatures in each case have a radius of curvature which is at least 100 times and at most 0.1 times the lateral extent of the diffractive surface relief, and/or the one or more curvatures in each case have a radius of curvature in the range of from 10,000 mm to 10 mm, preferably from 1,000 mm to 25 mm.

4. Method according to one of the preceding claims,
**characterised in that**
for forming the provisional surface relief, first a master element, in particular comprising a photoresist, into which the provisional surface relief is moulded is provided, and then the substrate is moulded by the master element, wherein the provisional surface relief is moulded, by lithography and/or by means of a laser beam or electron beam and/or by illumination by means of a mask, into the master element and/or into the substrate.

**5.** Method according to claim 4,
**characterised in that**
once the diffractive surface relief has been moulded in, the substrate is produced by galvanic deposition of a metal onto the master element, wherein from the produced substrate, further substrates are produced by galvanic deposition of a metal.

**6.** Method according to one of the preceding claims,
**characterised in that**
for moulding in the provisional surface relief, a correction function (K) is ascertained, and, in order to determine a function (F2) describing the provisional surface relief, is applied to a function (F1) describing the diffractive effects to be achieved, wherein the correction function (K) describes or at least partially balances out the modification of the diffractive effects of the provisional surface relief due to the later deformation of the provisional surface relief by the reshaping.

**7.** Method according to one of the preceding claims,
**characterised in that**
the mould insert (3) is secured in the injection mould (5) by means of a clamping element and/or is held on an undercut of the injection mould and/or is adhered to the injection mould (5).

**Revendications**

**1.** Procédé de fabrication d'une pièce moulée en matière plastique (1), dans lequel un insert de moulage (3) avec un relief superficiel diffractif (32) est fourni dans le procédé, l'insert de moulage (3) est inséré dans un demi-moule d'un moule de coulée par injection (5), lequel réalise, conjointement avec au moins un autre demi-moule, une cavité pour fabriquer la pièce moulée en matière plastique (1), dans lequel l'insert de moulage (3) est inséré de telle sorte dans le moule de coulée par injection (5) que le relief superficiel diffractif (32) réalise une zone partielle de la surface, formée par le demi-moule (5), de la cavité, et la pièce moulée en matière plastique (1) est moulée au moyen du moule de coulée par injection (5) par coulée par injection, dans lequel un relief superficiel diffractif temporaire est réalisé dans une surface d'un substrat lors de la fourniture de l'insert de moulage (3) puis le substrat est mis en forme pour réaliser l'insert de moulage (3), dans lequel lors de la mise en forme, le relief superficiel temporaire est déformé en le relief superficiel diffractif (32) de l'insert de moulage (3).

**2.** Procédé selon la revendication 1,
**caractérisé en ce**
qu'est fourni en tant qu'insert de moulage (3) un insert de moulage (3) dont le relief superficiel diffractif (32) est réalisé par une superposition par addition ou par soustraction d'une microstructure diffractive et d'une macrostructure incurvée.

**3.** Procédé selon la revendication 2,
**caractérisé en ce**
qu'est fourni en tant qu'insert de moulage (3) un insert de moulage (3), dont la macrostructure décrit une face de moulage libre incurvée au moins par endroits avec une ou plusieurs incurvations, dans lequel les une ou plusieurs incurvations présentent respectivement un rayon d'incurvation, qui représente au moins 100 fois et au maximum 0,1 fois l'extension latérale du relief superficiel diffractif, et/ou les une ou plusieurs incurvations présentent respectivement un rayon d'incurvation dans la plage de 10 000 mm à 10 mm, de manière préférée de 1000 mm à 25 mm.

**4.** Procédé selon l'une quelconque des revendications précédentes,
**caractérisé en ce**
que pour réaliser le relief superficiel temporaire, un élément maître, comprenant en particulier une laque de résist, est fourni en premier lieu, dans lequel le relief superficiel temporaire est pratiqué, puis le substrat est moulé par l'élément maître, dans lequel le relief superficiel temporaire est pratiqué dans l'élément maître et/ou dans le substrat par lithographie et/ou au moyen d'un faisceau laser ou électronique et/ou par exposition à la lumière au moyen d'un masque.

**5.** Procédé selon la revendication 4,
**caractérisé en ce**
qu'une fois le relief superficiel diffractif pratiqué, le substrat est produit par séparation galvanique d'un métal sur l'élément maître, dans lequel d'autres substrats sont produits par séparation galvanique d'un métal par le substrat produit.

**6.** Procédé selon l'une quelconque des revendications précédentes,
**caractérisé en ce**
que pour pratiquer le relief superficiel temporaire, une fonction de correction (K) est déterminée et est appliquée sur une fonction (F1) décrivant les effets diffractifs à obtenir pour définir une fonction (F2) décrivant le relief superficiel temporaire, dans lequel la fonction de correction (K) décrit ou compense au moins en partie en particulier la modification des effets diffractifs du relief superficiel temporaire par la déformation ultérieure du relief superficiel temporaire par la mise en forme.

**7.** Procédé selon l'une quelconque des revendications précédentes,
**caractérisé en ce**
**que** l'insert de moulage (3) est fixé dans le moule de coulée par injection (5) au moyen d'un élément de serrage et/ou est maintenu sur une contre-dépouille du moule de coulée par injection et/ou est collé au moule de coulée par injection (5).

**Fig. 1**

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0878291 A1
- US 2005285287 A1
- WO 2012006637 A1
- US 2002181224 A1